# DEMANDE DE BREVET EUROPEEN

(11) **EP 0 547 973 A1**
(43) Date de publication de la demande: **23.06.1993**
(21) Numéro de dépôt: 92403445.7
(22) Date de dépôt: 17.12.1992
(51) Int. Cl.: H04M 1/00, H04Q 11/04, H04L 29/06

(54) **Terminal numérique pour connexion à une terminaison numérique d'abonné, terminaison numérique d'abonné et protocole de communication entre le terminal et la terminaison**

(30) Priorité: 19.12.1991 FR 9115774
(71) Demandeur: SAT (Société Anonyme de Télécommunications), F-75116 Paris (FR)
(72) Inventeur: Turbet Delof, Luc Pierre Dominique, F-75625 Paris Cedex 13 (FR)
(74) Mandataire: Bloch, Gérard

(57) **Abrégé**

La présente invention concerne un terminal numérique prévu pour une connexion à une terminaison numérique d'abonné (TNA) . A cet effet, il comprend au moins une touche menu (6d) dont la fonction est apte à être téléchargée par la TNA.

## Description

La présente invention concerne un terminal numérique prévu pour une connexion à une terminaison numérique d'abonné (TNA), une TNA pour sa connexion et un protocole de communication entre le terminal numérique et la TNA.

La recommandation Q 932 du CCITT (procédure générique pour la commande des services supplémentaires RNIS sur l'accès numérique d'abonné) prévoit deux protocoles génériques de type stimulus, dont le protocole de gestion des touches de fonction d'un terminal numérique.

Ce protocole repose sur l'emploi des éléments d'information "activation de fonction" et" indication de fonction" et permet notamment la mise en oeuvre de services supplémentaires en cours de communication.

Ce protocole est mis en oeuvre à l'initiative de l'usager qui envoie une demande d'activation de fonction en enfonçant la touche de fonction correspondante. Le réseau répond par une indication de fonction donnant notamment l'état du service demandé.

L'utilisation de ce protocole suppose que les touches de fonction soient définies à l'initialisation du terminai, ce qui implique une rigidité certaine. Il peut en effet être utile dans certaines procédures que le terminai dispose temporairement de certaines fonctions qui ne lui sont normalement pas accessibles.

La présente invention vise à fournir une telle possibilité.

A cet effet, l'invention a tout d'abord pour objet un terminal numérique prévu pour une connexion a une terminaison numérique d'abonné (TNA), caractérisé par le fait qu'il comprend au moins une touche menu et moyens pour mémoriser dynamiquement un numéro d'identification de fonction transmis par la TNA lors d'une opération de téléchargement et pour réémettre ce numéro lors de l'enfoncement de la touche menu.

Ce téléchargement peut notamment s'effectuer pendant toutes les phases de communication ou d'établissement de la communication.

Le processus mis en oeuvre est donc du type stimulus dans la mesure où le terminal numérique selon l'invention ignore la fonction associée à la touche menu puisqu'il ne fait que réémettre lors de l'enfoncement de cette touche le numéro d'identification de fonction qui lui a été assigné par la TNA. Il se distingue toutefois radicalement du protocole de gestion de touches de fonction en ce sens qu'il est initialisé non pas à la demande du terminal mais à la demande de la TNA qui, notamment lors de l'enfoncement de la touche menu, n'a pas à identifier le service demandé à partir du profil de service de l'usager puisque c'est elle même qui a programmé la fonction associée à cette touche.

Il en résulte l'avantage important qu'un terminal numérique selon l'invention peut offrir de manière conviviale de nouveaux services non prévus à l'origine sans changement de son programme.

On remarquera que le téléchargement d'un terminal par une TNA est en soi connu, par exemple par le document EP-A-0365200. Il ne s'agissait pas toutefois d'une opération dynamique, mais d'une programmation "hors ligne" sans relation avec une communication, effectuée uniquement lors d'une initialisation du terminal. Il n'était pas prévu non plus de simplement mémoriser un numéro d'identification de fonction pour ensuite le réémettre en mode stimulus.

Le terminal selon l'invention comprend de plus avantageusement des éléments d'affichages à proximité de ladite touche menu pour afficher le libellé de ladite fonction, lequel est téléchargé par la TNA.

Il peut également comprendre une touche GUIDE et un écran d'affichage pour afficher un commentaire sur ladite fonction lors de l'enfoncement de la touche GUIDE. Ce commentaire est également téléchargé par la TNA.

La présente invention a également pour objet une terminaison numérique d'abonné TNA agencée pour télécharger dynamiquement la fonction d'une touche menu d'un terminal numérique tel que décrit ci-dessus.

Cette TNA est en outre avantageusement agencée pour désactiver en cours de communication une fonction préalablement téléchargée.

La présente invention a également pour objet un protocole de communication entre une TNA et un terminai tel que décrit ci-dessus, comprenant la transmission dans le sens TNA-terminal d'un message contenant dans ses éléments d'information, des indications de fonction d'une fonction à proposer sur ladite touche menu.

Ces indications de fonction peuvent notamment comprendre un numéro d'identification de fonction, un indicateur d'activation ou de désactivation, un libellé associé à ladite fonction et un commentaire sur cette fonction.

Le protocole selon l'invention peut en outre comprendre la transmission dans le sens terminal-TNA d'un message contenant, dans ses éléments d'information, une information d'activation de fonction lors de l'enfoncement de ladite touche menu postérieur à son téléchargement.

Ladite information d'activation de fonction peut notamment comprendre le numéro d'identification de fonction préalablement mémorisé.

Dans un mode de réalisation particulier de l'invention les indications de fonction ou informations d'activation de fonction apparaissent dans ledit message comme des sous-éléments d'information d'un élément d'information spécifique qui peut notamment appartenir au jeu de codes 7 de la recommandation Q 931 du CCITT.

On décrira maintenant à titre d'exemple non limitatif un mode de réalisation particulier de l'invention, en référence aux dessins annexés dans lesquels :
- la figure 1 illustre un terminal numérique et une TNA selon l'invention;
- la figure 2 représente le codage d'un message incluant un sous-élément d'information "S-indication de fonction" conformément à l'invention;
- la figure 3 représente un sous-élément d'information "S-activation de fonction", et
- la figure 4 représente une séquence d'appel conforme à l'invention.

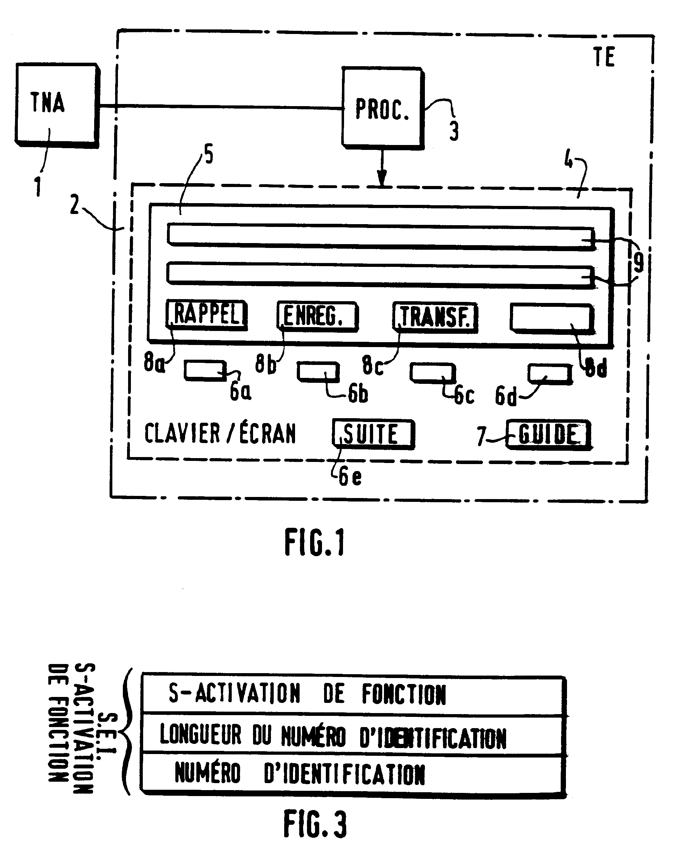

On voit sur la figure 1 une TNA 1 à laquelle est raccordé un terminal numérique 2 comprenant un processeur 3, un clavier/écran 4 et un combiné non représenté.

L'ensemble 4 comprend un écran d'affichage LCD 5, des touches menu 6a-6d, une touche SUITE 6e et une touche GUIDE 7.

L'écran d'affichage comprend en vis à vis de chaque touche menu 6a-6d une zone d'affichage 8a-8d comportant, chacune, quelques éléments d'affichage. Il comprend également une zone d'affichage 9 de plus grande dimension répartie ici sur deux lignes.

Pour chacun des états possibles du terminal numérique 2, certaines des touches menu, par exemple les touches 6a-6c, sont entièrement gérées par le terminai en mode fonctionnel.

Les autres touches menu, ici la touche 6d, sont des touches menu conformes à l'invention, c'est à dire que la TNA peut indiquer en cours de communication ou d'établissement de communication, des fonctions qu'elle souhaite voir proposer à l'usager, auquel cas le terminal sélectionne l'une de ces touches menu libres et lui affecte cette fonction. On verra en fait ci-après que la procédure de sélection de cette fonction étant du type stimulus, le terminal associe à la touche menu uniquement un numéro d'identification de fonction qui sera transmis à la TNA par enfoncement de la touche associée sans que le terminal ait connaissance de la fonction correspondante.

La répartition des touches menu gérées par le terminai et des touches menu conformes à l'invention est dynamique et dépend de l'état actuel du terminal. Si, dans l'exemple choisi, le nombre de touches menu gérées par le terminal est, à un instant donné, égal à 4, alors il est cependant possible d'accéder à une fonction téléchargée selon l'invention en sélectionnant la touche SUITE préalablement au choix de la touche désirée.

Lorsque le terminal est en fonction, les zones d'affichages 8a-8c correspondant aux touches fonctionnelles 6a-6c indiquent la fonction associée à chaque touche. Au contraire, les zones d'affichage correspondant à des touches menu selon l'invention sont éteintes si, dans l'état actuel du terminal, aucune fonction n'est proposée par la TNA.

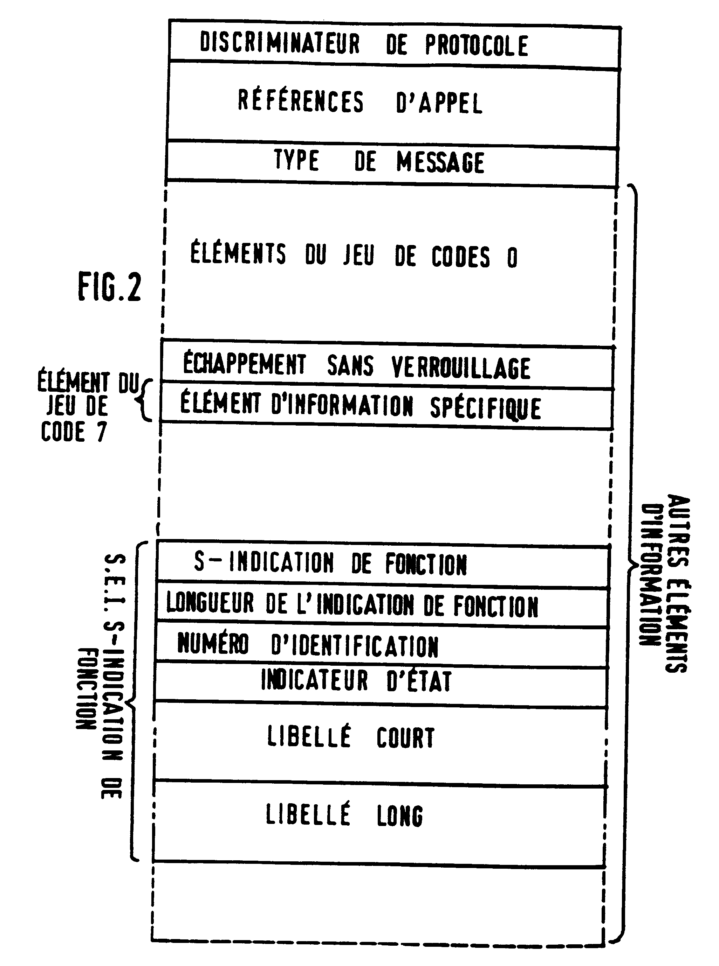

On décrira maintenant en référence à la figure 2 un message susceptible d'être émis par la TNA pour mettre en oeuvre l'invention.

Comme tout message, celui-ci débute par un octet de discriminateur de protocole, deux octets de référence d'appel et un octet de type de message.

Le discriminateur de protocole, dans le cas de messages de commande d'appel usager-réseau conformes à la recommandation Q 931, est le suivant :
00001000.

La référence d'appel est gérée conformément à la recommandation Q 931.

Le type de message peut-être quelconque, par exemple établissement, déconnexion, libération, mais on utilisera généralement un message d'information.

A la suite de ces trois champs figurent les autres éléments d'information parmi lesquels éventuellement des éléments du jeu de codes 0.

A la suite des éléments du jeu de codes 0, figure l'élément d'information "changement de code sans verrouillage" introduisant l'élément d'information suivant pris parmi les éléments du jeu de codes 7, par exemple :
1111000.

Les éléments d'information suivants seront considérés comme des sous-éléments d'information de cet élément d'information spécifique.

Un certain nombre de tels sous-éléments d'information peuvent être contenus dans la suite du message, mais on décrira maintenant les sous-éléments d'information conformes à l'invention que l'on dénommera "S-indication de fonction" et "S-activation de fonction" pour les distinguer des éléments d'information "indication de fonction" et "activation de fonction" de la recommandation Q 932.

Le sous-élément d'information "S-indication de fonction" débute par un identificateur suivi de la longueur de l'identification de fonction et d'un numéro d'identification de fonction. Ce numéro est affecté par la TNA pour laquelle il est associé à une fonction particulière à laquelle l'usager a accès.

L'indicateur d'état peut prendre deux valeurs suivant qu'il s'agit de télécharger ou d'activer une fonction conformément à l'invention, ou de la désactiver.

Le libellé court consiste en la dénomination de la fonction éventuellement abrégée pour la rendre compatible avec la longueur de la zone d'affichage 8d.

Enfin le libellé long consiste en un commentaire sur la fonction téléchargée pouvant s'afficher dans la zone d'affichage 9.

Le message peut éventuellement se continuer par d'autres sous-éléments d'information.

Lorsque le terminal reçoit un tel message dans lequel l'indicateur d'état a la valeur "activation", le processeur 3 mémorise le numéro d'identification, il lui associe une touche menu libre (par exemple 6d), il affiche le libellé court dans la zone d'affichage correspondante (ici 8d) et il mémorise le libellé long.

Si l'utilisateur souhaite faire afficher le libellé long dans la zone d'affichage 9 il enfonce la touche GUIDE 7, puis la touche menu associée au libellé court (ici 6d).

S'il souhaite activer la fonction ainsi téléchargée il enfonce seulement la touche 6d correspondante.

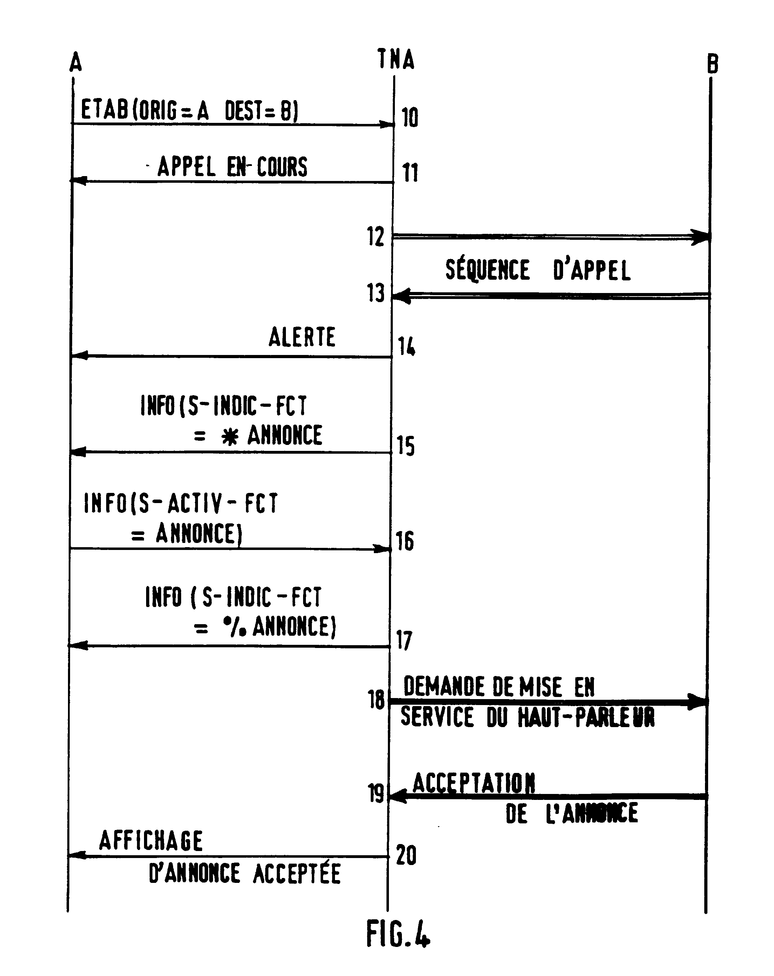

Le terminal émet alors un message d'information du même type que celui décrit précédemment mais comportant cette fois le sous-élément d'information "S-activation de fonction" que l'on décrira maintenant en référence à la figure 3.

Ce sous élément d'information comporte tout d'abord un identificateur puis la longueur du numéro d'identification et enfin le numéro d'indentification mémorisé comme exposé ci-dessus.

A la réception de ce message, la TNA activera la fonction correspondante.

On donnera maintenant, en référence à la figure 4, un exemple d'utilisation de ces messages.

Il s'agit dans le cas présent de donner la possibilité à un terminal Aqui normalement n'en dispose pas, de forcer lors d'un appel la réponse d'un terminal demandé B qui ne répond pas en établissant une connexion phonique entre les deux terminaux (mise en position "mains libres" du demandé) l'appel restant toutefois en phase alerte.

En 10 le message "établissement" est émis conventionnellement par le terminal A, la TNA répondant en 11 par le message "appel en cours".

En 12 et 13 la TNA active la procédure d'appel à destination du terminal B.

En 15 la TNAadresse alors au terminal A un message "information" comportant un sous-élément d'information, "S-indication de fonction", un numéro d'identification de cette fonction quelconque, un indicateur d'état ayant la valeur "activation", un libellé court ayant la valeur "annonce" et un libellé long indiquant par exemple "enfoncer la touche annonce pour établir une liaison phonique".

Lors de la réception de ce message, le terminal A prend les dispositions décrites ci-dessus affichant notamment le terme "annonce" dans la zone d'affichage de la touche menu libre qu'il a sélectionné pour cette fonction.

Si l'utilisateur enfonce cette touche, le terminal A adresse en 16 à la TNA un message "information" contenant le sous élément d'information "S-activation de fonction" comportant le même numéro d'identification.

La TNA envoie alors en 17 au terminal A un nouveau message "information" identique à celui envoyé en 15 si ce n'est que l'indicateur d'état du sous-élément d'information "S-indication de fonction" a alors la valeur "désactivation" puisque la fonction correspondante n'a pas lieu d'être de nouveau utilisée.

En 18, la TNAdemande au terminal B de se configurer dans l'état désiré (mise en service de son haut- parleur) et en 19, le terminal B confirme à la TNAI'exécution de cette commande.

La mise en oeuvre du service "annonce" du côté du terminal B ne sera pas décrite, n'entrant pas dans le cadre de l'invention.

Enfin, en 20 la TNAadresse au terminal Aun message "information" de demande d'affichage amenant le terminal A à afficher le fait que l'annonce a été acceptée.

## Revendications

1. Terminal numérique prévu pour une connexion à une terminaison numérique d'abonné (TNA), caractérisé par le fait qu'il comprend au moins une touche menu (6d) et des moyens (3) pour mémoriser dynamiquement un numéro d'identification de fonction transmis par la TNA lors d'une opération de téléchargement et pour réémettre ce numéro lors de l'enfoncement de la touche menu.

2. Terminal numérique selon la revendication 1, comprenant des éléments d'affichage (8d) à proximité de ladite touche menu pour afficher le libellé de ladite fonction.

3. Terminal numérique selon l'une quelconque des revendications 1 et 2, comprenant une touche GUIDE (7) et un écran d'affichage (9) pour afficher un commentaire sur ladite fonction lors de l'enfoncement de la touche GUIDE.

4. Terminaison numérique d'abonné agencée pour télécharger dynamiquement la fonction d'une touche menu d'un terminal numérique selon l'une quelconque des revendications 1 à 3.

5. Terminaison numérique d'abonné selon la revendication 4, agencée pour désactiver une fonction préalablement téléchargée.

6. Protocole de communication entre une TNAselon l'une quelconque des revendications 4 et 5 et un terminal selon l'une quelconque des revendications 1 à 3, comprenant la transmission, dans le sens TNA-terminal, d'un message contenant, dans ses éléments d'information, des indications de fonction d'une fonction à proposer sur ladite touche menu.

7. Protocole de communication selon la revendication 6, dans lequel lesdites indications de fonction comprennent un numéro d'identification de fonction.

8. Protocole de communication selon l'une quelconque des revendications 6 et 7, dans lequel lesdites indications de fonction comprennent un indicateur d'activation ou de désactivation.

9. Protocole de communication selon l'une quelconque des revendications 6 à 8, dans lequel lesdites indications de fonction comprennent un libellé associé à ladite fonction.

10. Protocole de communication selon l'une quelconque des revendications 6 à 9, dans lequel lesdites indications de fonction comprennent un commentaire sur ladite fonction.

11. Protocole de communication selon l'une quelconque des revendications 6 à 10, comprenant la transmission, dans le sens terminal-TNA, d'un message contenant, dans ses éléments d'information, une information d'activation de fonction, lors de l'enfoncement de ladite touche menu postérieur à son téléchargement.

12. Protocole de communication selon la revendication 11, dans lequel ladite information d'activation de fonction comprend le numéro d'identification de fonction préalablement mémorisé.

13. Protocole de communication selon l'une quelconque des revendications 6 a 12, dans lequel les indications de fonction ou informations d'activation de fonction apparaissent dans ledit message comme des sous-éléments d'information d'un élément d'information spécifique.

14. Protocole de communication selon la revendication 13, dans lequel ledit élément d'information spécifique appartient au jeu de codes 7 de la recommandation Q931 du CCITT.
